# EUROPÄISCHE PATENTSCHRIFT

(11) **EP 3 486 476 B1**
(45) Veröffentlichungstag und Bekanntmachung des Hinweises auf die Patenterteilung: **05.08.2020**
(21) Anmeldenummer: 18206399.0
(22) Anmeldetag: 15.11.2018
(51) Int. Cl.: F03D 1/06

(54) **STEG FÜR EIN ROTORBLATT EINER WINDENERGIEANLAGE UND VERFAHREN ZUM HERSTELLEN EINES STEGS**
SHEAR WEB FOR A ROTOR BLADE OF A WIND TURBINE AND METHOD FOR PRODUCING A SHEAR WEB
ENTRETOISE POUR UNE PALE DE ROTOR D'UNE ÉOLIENNE ET PROCÉDÉ DE FABRICATION D'UNE ENTRETOISE

(30) Priorität: 17.11.2017 DE 102017010651
(43) Veröffentlichungstag der Anmeldung: 22.05.2019
(73) Patentinhaber: Senvion GmbH, 22297 Hamburg (DE)
(72) Erfinder: Eyb, Enno, 24116 Kiel (DE)
(74) Vertreter: Glawe, Delfs, Moll

(56) Entgegenhaltungen:
- EP-A1- 2 881 237
- US-A1- 2014 294 591

## Beschreibung

Die Erfindung betrifft einen Steg für ein Rotorblatt einer Windenergieanlage und ein Verfahren zum Herstellen eines solchen Stegs.

Ein Rotor einer Windenergieanlage umfasst regelmäßig eine Mehrzahl von Rotorblättern, die an eine Nabe des Rotors angeschlossen sind. Der Rotor wird durch den Wind in Drehung versetzt, so dass über eine Rotorwelle beispielsweise ein Generator angetrieben werden kann, um elektrische Energie zu erzeugen. Das Rotorblatt soll einerseits den Kräften standhalten können, die im Betrieb der Windenergieanlage auf das Rotorblatt einwirken. Andererseits soll das Gewicht des Rotorblatts möglichst gering sein.

Das Rotorblatt kann als Schale aufgebaut sein mit einem saugseitigen Schalenteil und einem druckseitigen Schalenteil, zwischen denen ein Hohlraum eingeschlossen ist. Als Steg wird ein Bauelement bezeichnet, das sich in dem Hohlraum des Rotorblatts erstreckt und eine stabilisierende Verbindung zwischen dem saugseitigen Schalenteil und dem druckseitigen Schalenteil herstellt. Der Steg kann ungefähr in Längsrichtung des Rotorblatts ausgerichtet sein und sich über einen wesentlichen Teil der Länge des Rotorblatts zwischen der Rotorblattwurzel und der Rotorblattspitze erstrecken.

Der Steg hat unter anderem den Zweck, Schubkräfte von dem saugseitigen Schalenteil in das druckseitige Schalenteil zu übertragen sowie das saugseitige Schalenteil und das druckseitige Schalenteil im richtigen Abstand zueinander zu halten, also Zugkräfte und Drucckräfte zwischen den beiden Schalenteilen zu übertragen. Der Steg kann über einen ersten Stegfuß mit der ersten Schalenteil und über einen zweiten Stegfuß mit der zweiten Schalenteil verbunden sein. Zwischen den beiden Stegfüßen kann ein Stegkörper angeordnet sein.

Da für den Anschluss an ein Schalenteil eine gewisse Auflagefläche erforderlich ist, hat der Steg im Bereich des Stegfußes üblicherweise eine größere Breite als im Bereich des Stegkerns. Beispiele solcher Stege sind in DE 10 2011 082 664 A1 und DE 10 2012 223 707 A1 beschrieben. Dokument EP 2 881 237 A1 beschreibt ein Verfahren zum Herstellen eines Stegs aus einem Scherkörper und einem Fußflansch, wobei der Scherkörper und der Fußflansch über Faserlagen und Harz miteinander verbunden werden.

Der Erfindung liegt die Aufgabe zugrunde, einen Steg und ein Herstellungsverfahren vorzustellen, so dass der Steg kostengünstig und in der erforderlichen Stabilität hergestellt werden kann. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Der erfindungsgemäße Steg umfasst einen Stegkörper, in dessen Innerem ein Stegkern angeordnet ist, und einen Stegfuß, in dessen Innerem ein Formteil angeordnet ist. Das Formteil weitet sich von einer dem Stegkern zugewandten Stirnfläche zu einer Auflagefläche auf.

Die Erfindung hat erkannt, dass der Steg sich mit einem solchen Stegkern und einem solchen Formteil günstig fertigen lässt, wobei sich innerhalb des Stegs ein gleichmäßiger Kraftfluss ergibt.

Die Stirnfläche des Formteils ist in einer Ausführungsform so dimensioniert und angeordnet, dass sie die Breite des Stegkerns überdeckt. Die Stirnfläche des Formteils ist demnach mindestens so breit wie der Stegkern, an dem das Formteil anliegt. Die Erstreckung der Stirnfläche in der Breitendimension kann etwas größer sein als die Breite des Stegkerns, beispielsweise um bis zu 10% größer, vorzugsweise um bis zu 5% größer. Als Höhendimension des Stegs wird die Richtung bezeichnet, in der das Formteil und der Stegkern übereinander liegen. Die Breite ist senkrecht dazu ausgerichtet. Die Höhe und die Breite bilden gemeinsam den Querschnitt des Stegs. Die Längsrichtung des Stegs erstreckt sich senkrecht zu dem Querschnitt.

Der Stegkern wird durch das Formteil auf Abstand von der Auflagefläche gehalten, wobei der kleinste Abstand zwischen dem Stegkern und der Auflagefläche wenigstens so groß ist wie der kleinste Abstand zwischen der Stirnfläche und der Auflagefläche. Die Stirnfläche des Formteils kann einen Abschnitt umfassen, der einer Scheitellinie des Stegkerns gegenüberliegt. Die Stirnfläche des Formteils kann im Querschnitt betrachtet einen Abschnitt umfassen, der die Höhendimension senkrecht schneidet.

Die Stirnfläche des Formteils kann so gestaltet sein, dass sie einen Endabschnitt des Stegkerns umgreift. Als Endabschnitt wird ein Bereich des Stegkerns bezeichnet, der in Richtung eines Schalenteils des Rotorblatts ausgerichtet ist, wenn der Steg mit dem Rotorblatt verbunden ist. Über den Stegfuß wird in diesem zusammengesetzten Zustand die Verbindung zwischen dem Stegkern des Stegs und dem Schalenteil des Rotorblatts hergestellt.

Wenn ein Formteil einen Endabschnitt des Stegkerns umgreift, so folgt das Formteil ausgehend von einem Scheitelpunkt des Endabschnitts, der den geringsten Abstand zu dem Schalenteil des Rotorblatts hat, in zwei seitlichen Richtungen der Kontur des Stegkerns. Mit anderen Worten gibt es eine Verbindungsgrade zwischen zwei Punkten des Formteils, die den Endabschnitt des Stegkerns schneidet und insbesondere eine Mittelebene des Stegkerns schneidet. In einer Ausführungsform kann die Verbindungsgrade so gelegt werden, dass der Abstand zwischen der Verbindungsgrade und dem Scheitelpunkt des Stegkerns mindestens 10%, vorzugsweise mindestens 20%, weiter vorzugsweise mindestens 40% der Dicke des Stegkerns entspricht. Die Auflagefläche des Formteils ist der Innenfläche des angrenzenden Schalenteils des Rotorblatts zugewandt, wenn der Steg in das Rotorblatt eingesetzt ist. Zwischen der Auflagefläche des Formteils und der Innenfläche des Rotorblatts kann eine Klebeschicht angeordnet sein, durch die der Steg mit dem Schalenteil verbunden wird.

Die Stirnfläche des Formteils und/oder der Endabschnitt der Stegkerns können im Querschnitt die Form eines Kreissegments haben. Einer der Körper kann nach außen gewölbt sein und der andere Körper nach innen gewölbt sein, so dass der nach innen gewölbte Körper den nach außen gewölbten Körper umgreifen kann. Der Radius des nach außen gewölbten Kreissegments kann geringfügig kleiner sein als der Radius des nach innen gewölbten Kreissegments, so dass die Kreissegmente unter Berücksichtigung eventueller dazwischen angeordneter Lagen eines Fasermaterials gerade ineinander passen. Wenn das Kreissegment des nach innen gewölbten Körpers sich über einen Winkel von weniger als 180° erstreckt, kann die Winkelausrichtung zwischen dem Stegkern und dem Formteil angepasst werden. Das Kreissegment des nach innen gewölbten Körpers kann sich beispielsweise über einen Winkel zwischen 90° und 170°, vorzugsweise zwischen 120° und 160° erstrecken. Ein Winkel von 360° würde auf dieser Skala einem vollständigen Kreis entsprechen.

In einer Ausführungsform ist der Stegkern nach außen gewölbt und das Formteil nach innen gewölbt. Das Kreissegment kann sich über die gesamte Breite der Stirnfläche des Formteils erstrecken. Möglich ist auch, dass die Stirnfläche des Formteils eine größere Breite hat als das Kreissegment.

Die Stirnfläche des Formteils kann die Form einer Rinne aufweisen, die dem Stegkern zugewandt ist. Ein mittlerer Bereich der Rinne kann einer Scheitellinie des Stegkerns gegenüber liegen. Die beiden Schenkel der Rinne können den Endabschnitt des Stegkerns umgreifen. Der Endabschnitt des Stegkerns kann im Querschnitt der Form eines Kreissegments entsprechen. In einer Ausführungsform erstreckt das Kreissegment sich über 180° und verbindet zwei zueinander parallele Seitenflächen des Stegkerns.

Der Stegfuß kann eine Auflagefläche umfassen, deren Form durch die Auflagefläche des Formteils vorgegeben ist. Die Auflagefläche des Stegfußes kann von der Auflagefläche des Formteils nur durch eine oder mehrere Lagen eines Fasermaterials getrennt ist. Die Auflagefläche des Stegfußes kann der Innenfläche des Schalenteils des Rotorblatts zugewandt sein, wenn der Steg in dem Rotorblatt montiert ist. Mit der Auflagefläche kann eine zu der Innenfläche des Schalenteils parallele Ebene definiert werden.

Das Formteil kann eine erste Flanke umfassen, die sich zwischen der Auflagefläche und dem Stegkern erstreckt. Die erste Flanke kann im Querschnitt des Stegs betrachtet mit der Auflagefläche einen Winkel zwischen 30° und 60°, vorzugsweise zwischen 40° und 50° einschließen. Das Formteil kann eine abgerundete Kante aufweisen, die den Übergang zwischen der Auflagefläche und der ersten Flanke bildet. Der Radius der Kantenrundung kann beispielsweise zwischen 1 mm und 20 mm liegen. Die Breite der Auflagefläche kann beispielsweise zwischen 30 mm und 300 mm liegen. Der Abstand zwischen der Auflagefläche des Formteils und der an das Formteil angrenzenden Scheitellinie des Stegkerns kann beispielsweise zwischen 5 mm und 150 mm liegen.

Die erste Flanke kann im Querschnitt betrachtet einen Abschnitt aufweisen, der eben ist. Der ebene Abschnitt kann sich von dem Übergangsbereich zu der Auflagefläche bis zum kernseitigen Ende der ersten Flanke erstrecken. In einer alternativen Ausführungsform umfasst die erste Flanke im Querschnitt betrachtet einen konkaven Abschnitt. Konkav bedeutet, dass es eine Verbindungsgrade zwischen zwei Punkten der Flanke gibt, die das Formteil nicht schneidet.

Die erste Flanke des Formteils kann an ihrem kernseitigen Ende in einer Richtung auslaufen, die parallel zu der Seitenfläche des Stegkerns ist, also einen Winkel von 0° mit der Seitenfläche des Stegs einschließt. Für die Überleitung von Kräften zwischen dem Stegkern und dem Formteil ist ein Winkel von 0° vorteilhaft, allerdings kann es bei ungenauer Fertigung leicht zu einem Versatz zwischen dem kernseitigen Ende der ersten Flanke und der Seitenfläche des Stegkerns kommen. Dies ist unerwünscht. Für eine größere Toleranz gegenüber Fertigungsungenauigkeiten kann es deswegen von Vorteil sein, wenn der Winkel zwischen dem kernseitigen Ende der ersten Flanke und der Seitenfläche des Stegkerns etwas größer ist als 0°, beispielsweise größer ist als 2°, vorzugsweise größer ist als 5°. Bei einem zu großen Winkel wiederum verschlechtert sich die Kraftübertragung. Der Winkel ist deswegen vorzugsweise nicht größer als 20°, weiter vorzugsweise nicht größer als 10°.

Das Formteil kann eine zweite Flanke umfassen, die sich zwischen der Auflagefläche und dem Stegkern erstreckt. Betreffend die Form, die Ausrichtung und den Übergangsbereich zu der Seitenfläche des Stegkerns kann die zweite Flanke eines oder mehrere Merkmale aufweisen, die im Zusammenhang der ersten Flanke offenbart sind. Das kernseitige Ende der ersten Flanke und das kernseitige Ende der zweiten Flanke können den Endabschnitt des Stegkerns zwischen sich einschließen.

Der Übergang zwischen der zweiten Flanke und der Auflagefläche ist in einer Ausführungsform des Formteils anders gestaltet als der Übergang zwischen der ersten Flanke und der Auflagefläche. Insbesondere kann das Formteil zwischen der zweiten Flanke und der Auflagefläche eine nicht-abgerundete Kante aufweisen. Die zweite Flanke kann mit einem ebenen Abschnitt oder mit einem konkaven Abschnitt in Richtung der Auflagefläche auslaufen. Die Auflagefläche und die zweite Flanke können in dem Übergangsbereich beispielsweise einen Winkel zwischen 10° und 60°, vorzugsweise zwischen 20° und 50° miteinander einschließen.

Der Stegkern und das Formteil sind erfindungsgemäß in eine oder mehrere Lagen aus einem Fasermaterial eingekleidet, zum Beispiel in Form von Glasfasermatten. Das Fasermaterial erstreckt sich von der ersten Seitenfläche des Stegkerns über die erste Flanke des Formteils und die Auflagefläche des Formteils. Hierfür ist es von Vorteil, wenn der Übergang zwischen der ersten Flanke und der Auflagefläche des Formteils so gestaltet ist, dass das Fasermaterial ohne scharfen Knick herumgeführt werden kann. Am gegenüberliegenden Ende der Auflagefläche kann das Fasermaterial sich über das Ende des Formteils hinaus erstrecken.

Das Fasermaterial kann sich außerdem von der zweiten Seitenfläche des Stegkerns über die zweite Flanke des Formteils erstrecken. Wenn das Fasermaterial sich über das Ende des Formteils hinaus erstreckt, kann es mit dem Ende des von der Auflagefläche kommenden Fasermaterial überlappen.

Die Anzahl der Lagen von Fasermaterial, die auf der Seitenfläche des Stegkerns und auf der Flanke des Formteils aufliegt kann beispielsweise zwischen 2 und 4 liegen. Dies kann für die erste Flanke und/oder die zweite Flanke des Formteils gelten.
Das Formteil kann eine oder mehrere Lagen von Fasermaterial umfassen, die sich von der ersten Seitenfläche des Stegkerns um den Endabschnitt des Stegkerns herum zu der zweiten Seitenfläche des Stegkerns erstrecken. Diese Lagen des Fasermaterials sind also in einem Zwischenraum zwischen dem Endabschnitt des Stegkerns und dem Formteil angeordnet. Hier können sich beispielsweise eine Lage oder zwei Lagen des Fasermaterials erstrecken. Die um den Stegkern herumgeführten Lagen können in einem Abstand zwischen 100 mm und 500 mm von der Scheitellinie des Stegkerns enden.

Bei der Herstellung des Stegs kann das Fasermaterial mit einem flüssigen Material getränkt werden, das dem Steg im ausgehärteten Zustand Stabilität verleiht. Das aushärtende Material kann beispielsweise ein Epoxidharz sein.

Der Stegkern kann aus einem Sandwich-Kernmaterial bestehen, dessen Dichte beispielsweise zwischen 40 kg/m³ und 150 kg/m³ liegen kann. Eine derart geringe Dichte haben beispielsweise Schaummaterialien (PET, PVC, SAN) oder Balsaholz. Das Sandwich-Kernmaterial kann einen Elastizitätsmodul zwischen 20 MPa und 200 MPa bezogen auf die Höhendimension des Stegs aufweisen. Die Schubfestigkeit des Sandwich-Kernmaterials kann beispielsweise zwischen 0,5 MPa und 2 MPa liegen.

Das Formteil kann aus einem Material bestehen, dessen Dichte und/oder dessen Elastizitätsmodul größer sind als bei dem Sandwich-Kernmaterial. Beispielweise kann die Dichte des Formteils zwischen 150 kg/m³ und 1200 kg/m³, vorzugsweise zwischen 150 kg/m³ und 300 kg/m³ liegen. Der Elastizitätsmodul des Formteils kann zwischen 1000 MPa und 6000 MPa sein und damit in der gleichen Größenordnung liegen wie der Elastizitätsmodul des Klebers, der zum Verkleben mit dem Schalenteil des Rotorblatts verwendet wird. In einer Ausführungsform besteht das Formteil aus hochdichtem Polyurethanschaum (HD-PU) mit einer Dichte zwischen 150 kg/m³ und 300 kg/m³. Der Polyurethanschaum kann faserverstärkt sein. Besteht das Formteil aus reinem Polyurethan, so kann die Dichte in der Größenordnung von 1000 kg/m³ liegen.

Der erfindungsgemäße Steg kann ein erstes Formteil und ein zweites Formteil umfassen, die so angeordnet sind, dass sie den Stegkern zwischen sich einschließen. Das zweite Formteil kann eines oder mehrere Merkmale aufweisen, die im Zusammenhang des ersten Formteils beschrieben sind. Die Formteile können so ausgerichtet sein, dass die erste Flanke des ersten Formteils auf derselben Seite des Stegs angeordnet ist wie die erste Flanke des zweiten Formteils. Die Lagen des Fasermaterials können sich um den gesamten Steg herum erstrecken und dabei flächig auf den beiden Formteilen bzw. dem Stegkern aufliegen. Abgesehen von Überlappungen im Anschluss an die erste Flanke des ersten Formteils sowie im Anschluss an die erste Flanke des zweiten Formteils kann das Fasermaterial der Kontur des Stegs kontinuierlich folgen.

Die Länge des Stegs kann größer sein als 10 m, vorzugsweise größer sein als 20 m, weiter vorzugsweise größer sein als 50 m. Die Breite des Stegkerns kann über die Länge des Stegs variieren. Breite des Stegkerns bezeichnet die senkrecht zur Höhe ausgerichtete Dimension, wobei die Höhe des Stegs sich zwischen den beiden Formteilen erstreckt. Die Breite des Stegs kann in einem Bereich nahe der Blattwurzel größer sein als in einem Bereich nahe der Blattspitze. Der Stegkern kann so gestaltet sein, dass die Breite des Stegkerns sich über die Länge des Stegs kontinuierlich ändert.

Um die Fertigungskosten zu vermindern, kann der Stegkern so gestaltet sein, dass die Breite des Stegkerns sich an einer oder mehreren Stellen sprunghaft ändert. Es ist dann möglich, den Stegkern aus einer Mehrzahl von planparallelen Platten des Sandwich-Kernmaterials zusammenzusetzen. In einem Bereich, in dem eine Platte von geringerer Dicke an eine Platte von größerer Dicke stößt, ändert die Breite des Stegkerns sich sprunghaft. Möglich ist auch, dass im Bereich eines solchen Übergangs eine Ausgleichsrampe ausgebildet ist, die beispielsweise eine Steigung zwischen 1:5 und 1:20 haben kann. Der Stegkern kann beispielsweise Platten mit einer Dicke von ca. 10 mm, Platten mit einer Dicke von ca. 20 mm und/oder Platten mit einer Dicke von ca. 30 mm umfassen. Die für den Stegkern verwendeten Plattendicken können beispielsweise zwischen 8 mm und 60 mm liegen.

Das Formteil erstreckt sich vorzugsweise ohne Unterbrechung über die gesamte Länge des Stegs. Wenn das Formteil eine Rinne zur Aufnahme eines Endabschnitts des Stegkerns aufweist, so kann die Breite der Rinne an die Breite des Stegkerns angepasst sein. Insbesondere kann die Breite der Rinne sich ausgehend von einem Bereich nahe der Blattwurzel hin zu einem Bereich nahe der Blattspitze verjüngen. Die Verjüngung kann kontinuierlich ausgestaltet sein, also ohne sprunghafte Änderungen in der Breite der Rinne. Möglich ist auch, dass die Breite der Rinne sich passend zu den Dickensprüngen des Stegkerns sprunghaft ändert.

Im Querschnitt des Stegs betrachtet kann die Auflagefläche des ersten Formteils parallel zu der Auflagefläche des zweiten Formteils ausgerichtet sein. Die Auflageflächen können mit der Höhe des Stegkerns einen rechten Winkel oder einen vom rechten Winkel abweichenden Winkel einschließen. Möglich ist auch, dass die beiden Auflageflächen nicht parallel zueinander ausgerichtet sind, sondern einen Winkel miteinander einschließen, der beispielsweise zwischen 5° und 20° liegen kann. In einer ersten Ausführungsform schließen beide Auflageflächen einen Winkel 90° oder weniger mit der Höhe des Stegkerns. In einer zweiten Ausführungsform schließen beide Auflageflächen einen Winkel von 90° oder mehr mit der Höhe des Stegkerns ein. In einer dritten Ausführungsform schließt die erste Auflagefläche einen Winkel von weniger als 90° und die zweite Auflagefläche einen Winkel von mehr als 90° mit der Höhe des Stegkerns ein.

Die Ausrichtung der beiden Auflageflächen relativ zueinander kann über die Länge des Stegs unverändert bleiben. Möglich ist auch, dass die Ausrichtung der beiden Auflageflächen sich über die Länge des Stegs relativ zueinander ändert. Der Abstand zwischen den beiden Auflageflächen (bezogen auf die Höhe des Stegs) kann sich mit zunehmendem Abstand von der Blattwurzel vermindert.

Die Erfindung betrifft außerdem ein Rotorblatt für eine Windenergieanlage. Das Rotorblatt umfasst ein saugseitiges Schalenteil und ein druckseitiges Schalenteil. Die beiden Schalenteile sind an einer Vorderkante des Rotorblatts und an einer Hinterkante des Rotorblatts miteinander verbunden und schließen einen Hohlraum zwischen sich ein. In dem Hohlraum ist ein erfindungsgemäßer Steg angeordnet, wobei eine Auflagefläche eines ersten Formteils des Stegs mit dem saugseitigen Schalenteil und eine Auflagefläche eines zweiten Formteil des Stegs mit dem druckseitigen Schalenteil verbunden ist.

Die Länge des Stegs kann sich über wenigstens 80%, vorzugweise wenigstens 90% der Länge des Rotorblatts erstrecken. Das Rotorblatt kann eine Mehrzahl von Stegen umfassen, die im Wesentlichen parallel zueinander ausgerichtet sind. Das Rotorblatt kann durch die Stege in einer Mehrzahl von Kammern unterteilt werden, wobei jede Kammer durch zwei Stege sowie durch einen Abschnitt des saugseitigen Schalenteils und einen Abschnitt des druckseitigen Schalenteils begrenzt ist. Die Auflagefläche des ersten Formteils kann flächig mit dem Saugseiten Schalenteil verklebt sein. Die Auflagefläche des zweiten Formteils kann flächig mit dem zweiten Schalenteil verklebt sein.

Die Erfindung betrifft außerdem ein Verfahren zum Herstellen eines Stegs. Bei dem Verfahren werden eine oder mehrere Lagen eines Fasermaterials in eine Form eingelegt. Ein erstes Formteil und ein zweites Formteil werden auf die Lagen des Fasermaterials aufgelegt, so dass die Stirnflächen der Formteile einander zugewandt sind und dass die Auflageflächen der Formteile voneinander abgewandt sind. Ein Stegkern wird in die Form eingelegt, so dass der Stegkern zwischen den beiden Stirnflächen der Formteile angeordnet ist.

In einer Ausführungsform wird der Stegkern so in die Form eingelegt, dass ein erster Endabschnitt des Stegkerns von der Stirnfläche des ersten Formteils umgriffen wird und dass ein zweiter Endabschnitt des Stegkerns von der Stirnfläche des zweiten Formteils umgriffen wird.

Eine oder mehrere weitere Lagen des Fasermaterials können so in die Form eingelegt werden, dass das Fasermaterial sich von der zweiten Flanke des ersten Formteils über den Stegkern bis zu der zweiten Flanke des zweiten Formteils erstreckt. Die Lagen können sich über das erste Formteil und/oder das zweite Formteil hinaus erstrecken, so dass es zu einer Überlappung mit den zuerst eingelegten Lagen kommt. Ein Material, insbesondere ein Epoxidharz, kann in flüssiger Form in die Form eingebracht werden und aushärten, um den Stegkern, das erste Formteil, das zweite Formteil und das Fasermaterial relativ zueinander zu fixieren. Die Form kann frei von einer Hinterschneidung sein, so dass der fertige Steg leicht entformt werden kann.

In einer Ausführungsform des Verfahrens wird vor dem Einlegen des Stegkerns eine weitere Lage des Fasermaterials in die Form eingelegt, die sich zwischen dem ersten Formteil und dem Stegkern und/oder zwischen dem zweiten Formteil und dem Stegkern erstreckt.

Das Verfahren kann mit weiteren Merkmalen fortgebildet werden, die im Zusammenhang des erfindungsgemäßen Stegs beschrieben sind. Der Steg kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Seitenansicht einer Windenergieanlage mit einem erfindungsgemäßen Rotorblatt;
- Fig. 2:: eine schematische Darstellung eines erfindungsgemäßen Rotorblatts;
- Fig. 3:: einen Schnitt entlang Linie A-Ain Fig. 2 (vergrößert);
- Fig. 4:: einen erfindungsgemäßen Steg in Querschnittsdarstellung;
- Fig. 5:: einen Schritt bei der Fertigung eines erfindungsgemäßen Stegs;
- Fig. 6:: die Ansicht gemäß Fig. 4 bei einer anderen Ausführungsform der Erfindung.

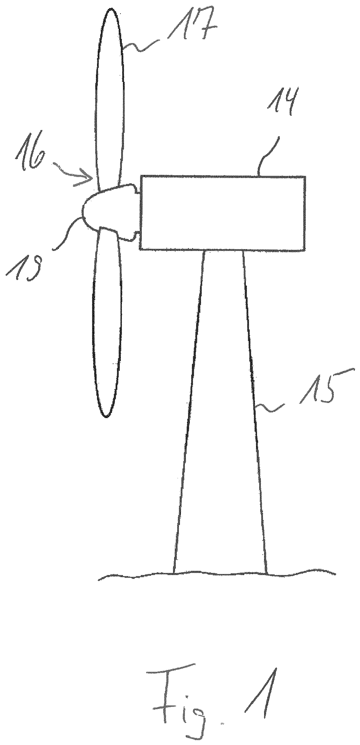

Eine Windenergieanlage umfasst gemäß Fig. 1 eine Gondel 14, die drehbar auf einem Turm 15 gelagert ist. Die Gondel trägt eine in Fig. 1 nicht sichtbare Rotorwelle, an die ein Rotor 16 angeschlossen ist. Der Rotor 16 umfasst eine Mehrzahl von Rotorblättern 17. Durch Drehen der Gondel 14 relativ zu dem Turm 15 wird der Rotor 16 in Windrichtung ausgerichtet. Der Rotor 16 wird durch den Wind in Drehung versetzt und treibt über die Rotorwelle einen Generator an, um elektrische Energie zu erzeugen.

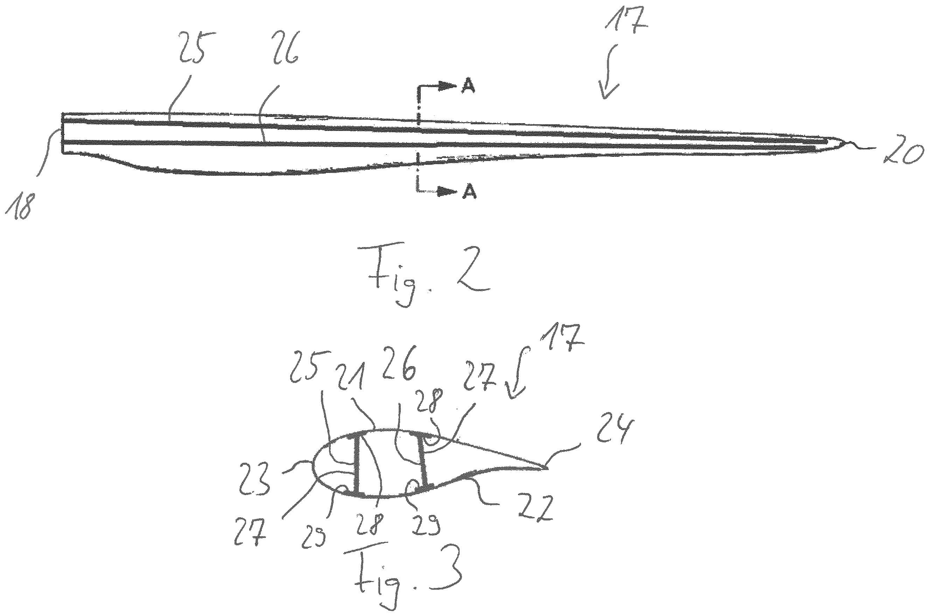

Jedes Rotorblatt 17 erstreckt sich zwischen einer Blattwurzel 18, die an eine Nabe 19 des Rotor 16 angeschlossen ist, und einer Blattspitze 20, siehe Fig. 2. Wie die Schnittdarstellung in Fig. 3 zeigt, ist das Rotorblatt 17 aus einem saugseitigen Schalenteil 21 und einem druckseitigen Schalenteil 22 zusammengesetzt. Die beiden Schalenteile 21, 22 sind an einer Vorderkante 23 sowie an einer Hinterkante 24 des Rotorblatts 17 miteinander verbunden. Die Schalenteile 21, 22 schließen zwischen sich einen Hohlraum ein, der einen Innenraum des Rotorblatts 17 bildet.

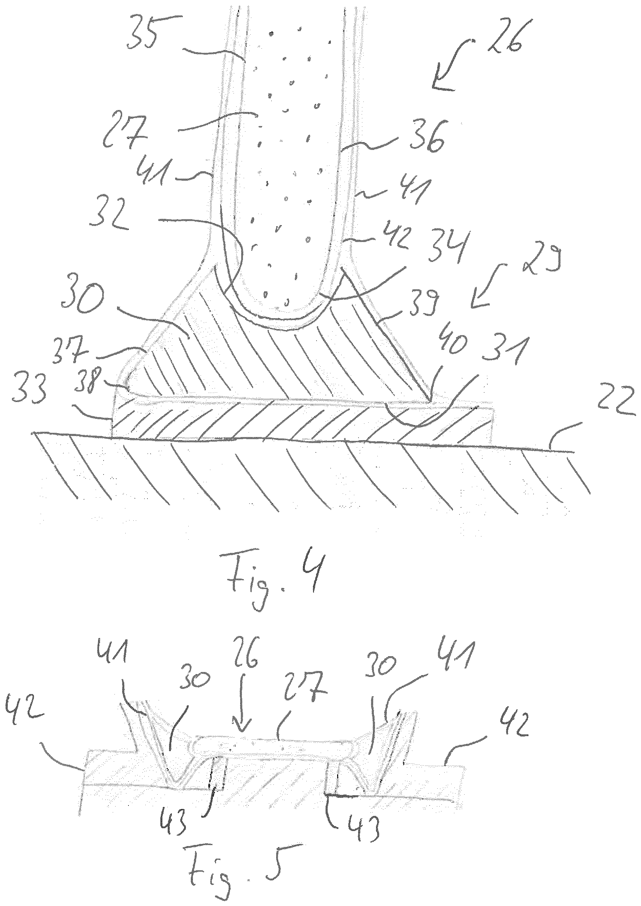

In dem Hohlraum sind zwei Stege 25, 26 angeordnet, die sich über nahezu die gesamte Länge des Rotorblatts 17 von der Blattwurzel 18 bis zur Blattspitze 20 erstrecken. Jeder Steg 25, 26 umfasst einen Stegkern 27 sowie zwei Stegfüße 28, 29. Die Stegfüße 28, 29 sind breiter als der Stegkern 27, so dass über die Stegfüße 28, 29 eine stabile Verbindung zu den Innenflächen der Schalenteile 21, 22 gebildet werden kann. Eine entsprechende Klebstoffschicht 33 zum Herstellen der Verbindung zwischen dem Stegfuß 29 und der Innenfläche des Schalenteils 22 ist in Fig. 4 dargestellt.

In der vergrößerten Schnittdarstellung gemäß Fig. 4 ist nur der untere Fuß 29 des Stegs 26 gezeigt. Der Stegfuß 29 umfasst ein Formteil 30, das sich zwischen einer Auflagefläche 31 und einer Stirnfläche 32 erstreckt, die als Rinne geformt ist. Die der Auflagefläche 31 gegenüberliegende Rinne 32 hat im Querschnitt die Form eines Kreissegments, das sich über einen Winkel von etwa 150° erstreckt. Mit der Rinne 32 umgreift das Formteil 30 einen unteren Endabschnitt 34 des Stegkerns 27.

Der untere Endabschnitt 34 des Stegkerns 27 ist im Querschnitt halbkreisförmig und geht über in zwei ebene Seitenflächen 35, 36 des Stegkerns 27. Der Stegkern 27 kann innerhalb der Rinne 32 geschwenkt werden, um die Ausrichtung des Stegkerns 27 relativ zu der Auflagefläche 31 anzupassen. Der Radius des unteren Endabschnitts 34 ist etwas kleiner als der Radius der Rinne 32, so dass eine Faserschicht 42 zwischen dem Stegkern 27 und der Rinne 32 hindurchgeführt werden kann.

Das Formteil 30 umfasst eine erste Flanke 37, die sich zwischen der Auflagefläche 31 und der Rinne 32 erstreckt. Die erste Flanke 37 ist im Querschnitt betrachtet eben und geht mit einer abgerundeten Kante 38 in die Auflagefläche 31 über. Das andere Ende der ersten Flanke 37 läuft gerade auf den Stegkern 27 zu und schließt mit der Seitenfläche 35 des Stegkerns einen Winkel von etwa 45° ein.

Die gegenüberliegende zweite Flanke 39 des Formteils 37 läuft in entsprechender Weise auf die zweite Seitenfläche 36 des Stegkerns 27 zu. Das untere Ende der zweiten Flanke 39 schließt mit der Auflagefläche 31 eine nicht abgerundete Kante 40 ein.

Der Stegkern 27 und das Formteil 30 sind eingebettet in mehrere Lagen eines Glasfasermaterials, von denen in Fig. 4 nur eine Lage 41 dargestellt ist. Die Lage 41 erstreckt sich von der ersten Seitenfläche 35 über die erste Flanke 37 des Formteils 30, die abgerundete Kante 38 und die Auflagefläche 31 bis über das untere Ende der zweiten Flanke 39 hinaus. Auf der anderen Seite des Stegs 26 erstreckt die Lage 41 sich von der zweiten Seitenfläche 36 des Stegkerns über die zweite Flanke 39 des Formteils 30 ebenfalls bis über die untere Kante der zweiten Flanke 39 hinaus. Im Bereich neben der Kante 40 überlappen die beiden überstehenden Enden der Lage 41. Eine weitere Lage 42 des Glasfasermaterials erstreckt sich von der ersten Seitenfläche 35 des Stegkerns 27 durch den Zwischenraum zwischen dem Endabschnitt 34 und der Rinne 32 hindurch bis zu der zweiten Seitenfläche 36 des Stegkerns 27.

Hergestellt wird ein erfindungsgemäßer Steg im liegenden Zustand in einer Form, wie sie in Fig. 5 dargestellt ist. Die Form wird durch Einstellen von beweglichen Teilen 42 und unter Verwendung von Einsatzstücken 43 an die gewünschte Gestalt des Stegs 26 angepasst. In die Form wird dann die erforderliche Anzahl von Lagen 41 des Glasfasermaterials eingelegt, wobei die Lagen 41 sich über die gesamte Breite der Form erstrecken. Auf die Lagen 41 werden zwei Formteile 30 aufgelegt, so dass die Auflageflächen 31 nach außen weisen. Nach dem Einbringen einer weiteren Lage 41, die die Rinnen 32 der beiden Formteile 30 abdeckt, wird der Stegkern 27 in die Form eingeführt, so dass die beiden Endabschnitte des Stegkerns 27 von den beiden Rinnen 32 der Formteile 30 umgriffen werden. Diese Anordnung wird von oben mit weiteren Lagen 41 des Glasfasermaterials abgedeckt. Am oberen Ende der beiden Formteile 30 überlappen die zuerst eingelegten Lagen 41 mit den zuletzt eingelegten Lagen 41. Das Ganze wird mit einem Epoxidharz in flüssiger Form getränkt. Nach dem Aushärten des Epoxidharzes sind die Teile relativ zueinander stabilisiert und bilden einen stabilen Steg 26.

Der Stegkern 27 besteht in dem Ausführungsbeispiel aus leichtem PET-Schaum mit einem Elastizitätsmodul von etwa 20 MPa. Die beiden Formteile 30 bestehen aus hochfestem und hochdichtem Polyurethanschaum mit einem Elastizitätsmodul in der Größenordnung von 1000 MPa.

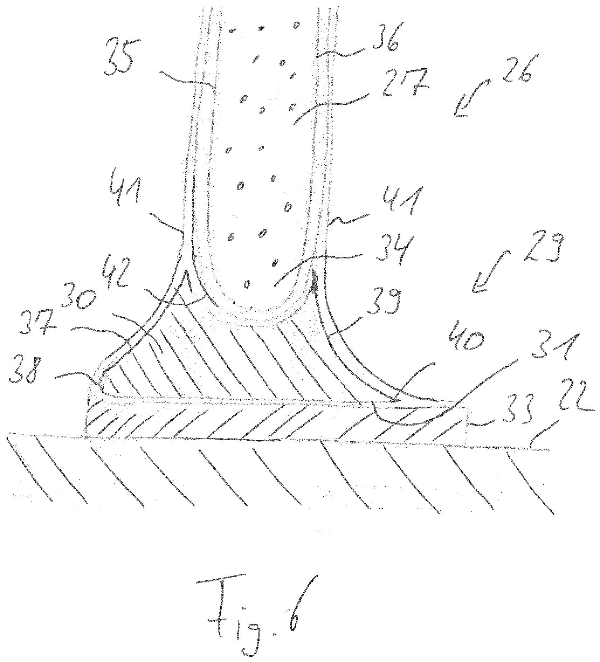

Bei der alternativen Ausführungsform eines Stegs 29 in Fig. 6 haben die erste Flanke 37 und die zweite Flanke 39 des Formteils 30 eine konkave Form. Die Flanken 37, 39 des Formteils 30 laufen mit einer Rundung auf die Seitenflächen 35, 36 des Stegkerns 27 zu, wobei die oberen Enden der Flanken 37, 39 einen kleinen Winkel mit den Seitenflächen 35, 36 einschließen. Für die Lagen 41 des Glasfasermaterials ergibt sich damit ein annähernd kontinuierlicher Übergang zwischen dem Formteil 30 und dem Stegkern 27, was für den Kraftfluss und die Stabilität des Stegs 27 von Vorteil ist.

Das untere Ende der zweiten Flanke 39 läuft ebenfalls in einer Rundung aus. Die auf der zweiten Flanke 39 und die auf der Auflagefläche 31 aufliegenden Lagen 41 können ohne Absatz oder Knick in die Überlappung übergehen, was ebenfalls für den Kraftfluss und die Stabilität des Stegs 27 von Vorteil ist.

## Patentansprüche

1. Steg für ein Rotorblatt (17) einer Windenergieanlage, mit einem Stegkörper, in dessen Innerem ein Stegkern (27) angeordnet ist, und mit einem Stegfuß (29), in dessen Innerem ein Formteil (30) angeordnet ist, wobei sich das Formteil (30) von einer dem Stegkern (27) zugewandten Stirnfläche (32) zu einer Auflagefläche (31) aufweitet, wobei der Stegkern (27) und das Formteil (30) in eine oder mehrere Lagen aus einem Fasermaterial (41) eingekleidet sind, **dadurch gekennzeichnet, dass** das Fasermaterial (41) sich von einer ersten Seitenfläche (35) des Stegkerns (27) über eine erste Flanke (37) des Formteils (30) und die Auflagefläche (31) des Formteils (30) erstreckt.

2. Steg nach Anspruch 1, **dadurch gekennzeichnet, dass** die Stirnfläche (32) des Formteils (30) die Breite des Stegkerns überdeckt.

3. Steg nach Anspruch 1 oder 2, **dadurch gekennzeichnet, dass** die Stirnfläche (32) des Formteils (30) einen Endabschnitt (34) des Stegkerns (27) umgreift.

4. Steg nach einem der Ansprüche 1 bis 3, **dadurch gekennzeichnet, dass** die Stirnfläche (32) des Formteils (30) und der Endabschnitt (34) des Stegkerns (27) im Querschnitt betrachtet eine Kontur in Form eines Kreissegments haben, wobei eines der Kreissegmente nach außen gewölbt und das andere Kreissegment nach innen gewölbt ist.

5. Steg nach Anspruch 4, **dadurch gekennzeichnet, dass** das nach innen gewölbte Kreissegment sich über einen Winkel zwischen 90° und 180°, vorzugsweise über einen Winkel zwischen 120° und 160° erstreckt.

6. Steg nach Anspruch 4 oder 5, **dadurch gekennzeichnet, dass** der Radius des nach außen gewölbten Kreissegments etwas kleiner ist als der Radius des nach innen gewölbten Kreissegments, so dass beide Kreissegmente zusammenpassen, wenn eine oder mehrere Lagen eines Fasermaterials zwischen den Kreissegmenten angeordnet sind.

7. Steg nach einem der Ansprüche 1 bis 6, **dadurch gekennzeichnet, dass** die Stirnfläche (32) des Formteils als eine dem Stegkern (27) zugewandte Rinne ausgebildet ist.

8. Steg nach einem der Ansprüche 1 bis 7, **gekennzeichnet durch** eine abgerundete Kante (38) zwischen einer ersten Flanke (37) und der Auflagefläche (31) des Formteils (30).

9. Steg nach einem der Ansprüche 1 bis 8, **gekennzeichnet durch** eine nicht-abgerundete Kante (40) zwischen einer zweiten Flanke (39) und der Auflagefläche (31) des Formteils (30).

10. Steg nach einem der Ansprüche 1 bis 9, **dadurch gekennzeichnet, dass** die erste Flanke (37) und/oder die zweite Flanke (39) des Formteils (30) im Querschnitt betrachtet einen konkaven Abschnitt umfasst.

11. Steg nach einem der Ansprüche 1 bis 10, **dadurch gekennzeichnet, dass** eine auf der Auflagefläche (31) des Formteils (30) aufliegende Lage des Fasermaterials (41) in eine Überlappung geführt ist mit einer auf der zweiten Flanke (39) des Formteils (30) aufliegenden Lage des Fasermaterials (41).

12. Steg nach einem der Ansprüche 1 bis 11, **dadurch gekennzeichnet, dass** in Längsrichtung des Stegs betrachtet der Stegkern (27) eine sprunghafte Änderung der Breite aufweist und dass die Rinne (32) des Formteils (30) keine sprunghafte Änderung des Durchmessers aufweist.

13. Steg nach einem der Ansprüche 1 bis 12, **dadurch gekennzeichnet, dass** der Stegkern (27) zwischen einem ersten Formteil (30) und einem zweiten Formteil (30) angeordnet ist.

14. Rotorblatt für eine Windenergieanlage, umfassend ein saugseitiges Schalenteil (21) und ein druckseitiges Schalenteil (22), wobei die Schalenteile (21, 22) an einer Vorderkante (23) und an einer Hinterkante (24) des Rotorblatts miteinander verbunden sind und einen Hohlraum zwischen sich einschließen, und mit einem Steg nach einem der Ansprüche 1 bis 13, wobei eine erste Auflagefläche des Stegs mit dem saugseitigen Schalenteil (21) und eine zweite Auflagefläche des Stegs mit dem druckseitigen Schalenteil (22) verbunden ist.

15. Verfahren zum Herstellen eines Stegs gemäß eines der Ansprüche 1-13, bei dem eine oder mehrere Lagen (41) eines Fasermaterials in eine Form eingelegt werden, bei dem ein erstes Formteil (30) und ein zweites Formteil (30) auf die Lagen (41) des Fasermaterials aufgelegt werden, so dass die Stirnflächen (32) der Formteile (30) einander zugewandt sind und dass die Auflageflächen (31) der Formteile (30) voneinander abgewandt sind, und bei dem ein Stegkern (27) in die Form eingelegt wird, so dass der Stegkern (27) zwischen den Stirnflächen (32) der Formteile (30) angeordnet ist.

## Claims

1. Shear web for a rotor blade (17) of a wind turbine, having a shear web body inside which there is arranged a shear web core (27), and having a shear web root (29) inside which there is arranged a form part (30), wherein the form part (30) widens from an end face (32) facing the shear web core (27) to a bearing face (31), wherein the shear web core (27) and the form part (30) are clad in one or more layers consisting of a fibre material (41), **characterized in that** the fibre material (41) extends from a first side face (35) of the shear web core (27) over a first flank (37) of the form part (30) and the bearing face (31) of the form part (30).

2. Shear web according to Claim 1, **characterized in that** the end face (32) of the form part (30) covers the breadth of the shear web core.

3. Shear web according to Claim 1 or 2, **characterized in that** the end face (32) of the form part (30) wraps around an end portion (34) of the shear web core (27).

4. Shear web according to one of Claims 1 to 3, **characterized in that** the end face (32) of the form part (30) and the end portion (34) of the shear web core (27) have, when seen in cross section, a contour in the form of a segment of a circle, wherein one of the circle segments is curved towards the outside and the other circle segment is curved towards the inside.

5. Shear web according to Claim 4, **characterized in that** the inwardly curved circle segment extends over an angle of between 90° and 180°, preferably over an angle of between 120° and 160°.

6. Shear web according to Claim 4 or 5, **characterized in that** the radius of the outwardly curved circle segment is somewhat smaller than the radius of the inwardly curved circle segment, so that the two circle segments fit together when one or more layers of a fibre material are arranged between the circle segments.

7. Shear web according to one of Claims 1 to 6, **characterized in that** the end face (32) of the form part is designed as a trough facing the shear web core (27).

8. Shear web according to one of Claims 1 to 7, **characterized by** a rounded edge (38) between a first flank (37) and the bearing face (31) of the form part (30).

9. Shear web according to one of Claims 1 to 8, **characterized by** a non-rounded edge (40) between a second flank (39) and the bearing face (31) of the form part (30).

10. Shear web according to one of Claims 1 to 9, **characterized in that** the first flank (37) and/or the second flank (39) of the form part (30) comprises a concave portion when viewed in cross section.

11. Shear web according to one of Claims 1 to 10, **characterized in that** a layer of the fibre material (41) that is lying against the bearing face (31) of the form part (30) is guided into an overlap with a layer of the fibre material (41) that is lying against the second flank (39) of the form part (30).

12. Shear web according to one of Claims 1 to 11, **characterized in that**, when viewed in the longitudinal direction of the shear web, the shear web core (27) has an abrupt change in breadth, and **in that** the trough (32) of the form part (30) has no abrupt change in diameter.

13. Shear web according to one of Claims 1 to 12, **characterized in that** the shear web core (27) is arranged between a first form part (30) and a second form part (30).

14. Rotor blade for a wind turbine, comprising a suction-side shell part (21) and a pressure-side shell part (22), wherein the shell parts (21, 22) are joined together at a leading edge (23) and at a trailing edge (24) of the rotor blade and enclose a cavity between them, and with a shear web according to one of Claims 1 to 13, wherein a first bearing face of the shear web is connected to the suction-side shell part (21) and a second bearing face of the shear web is connected to the pressure-side shell part (22).

15. Method for producing a shear web according to one of Claims 1-13, in which one or more layers (41) of a fibre material are laid in a form in which a first form part (30) and a second form part (30) are laid on the layers (41) of the fibre material so that the end faces (32) of the form parts (30) face one another, and that the bearing faces (31) of the form parts (30) face away from one another, and in which a shear web core (27) is laid in the form so that the shear web core (27) is arranged between the end faces (32) of the form parts (30) .

## Revendications

1. Entretoise destinée à une pale de rotor (17) d'une éolienne, ladite entretoise comprenant un corps d'entretoise, à l'intérieur duquel est disposé un noyau d'entretoise (27), et un pied d'entretoise (29), à l'intérieur duquel est disposée une partie de moule (30), la partie de moule (30) s'élargissant depuis une face frontale (32) dirigée vers le noyau d'entretoise (27) vers une face d'appui (31), le noyau d'entretoise (27) et la partie de moule (30) étant revêtus d'une matière fibreuse (41) en au moins une couche, **caractérisée en ce que** la matière fibreuse (41) s'étend depuis une première face latérale (35) du noyau d'entretoise (27) par le biais d'un premier flanc (37) de la partie de moule (30) et de la face d'appui (31) de la partie de moule (30).

2. Entretoise selon la revendication 1, **caractérisée en ce que** la face frontale (32) de la partie de moule (30) couvre la largeur du noyau d'entretoise.

3. Entretoise selon la revendication 1 ou 2, **caractérisée en ce que** la face frontale (32) de la partie de moule (30) s'engage autour d'une portion d'extrémité (34) du noyau d'entretoise (27).

4. Entretoise selon l'une des revendications 1 à 3, **caractérisée en ce que** la face frontale (32) de la partie de moule (30) et la portion d'extrémité (34) du noyau d'entretoise (27) présentent dans une vue en coupe transversale un contour en forme de segment de cercle, l'un des segments de cercle étant incurvé vers l'extérieur et l'autre segment de cercle étant incurvé vers l'intérieur.

5. Entretoise selon la revendication 4, **caractérisée en ce que** le segment de cercle incurvé vers l'intérieur s'étend sur un angle compris entre 90° et 180°, de préférence sur un angle compris entre 120° et 160°.

6. Entretoise selon la revendication 4 ou 5, **caractérisée en ce que** le rayon du segment de cercle incurvé vers l'extérieur est légèrement inférieur au rayon du segment de cercle incurvé vers l'intérieur de sorte que les deux segments de cercle concordent lorsqu'au moins une couche d'une matière fibreuse est disposée entre les segments de cercle.

7. Entretoise selon l'une des revendications 1 à 6, **caractérisée en ce que** la face frontale (32) de la partie de moule est réalisée sous la forme d'une rainure dirigée vers le noyau d'entretoise (27).

8. Entretoise selon l'une des revendications 1 à 7, **caractérisée par** un bord arrondi (38) entre un premier flanc (37) et la face d'appui (31) de la partie de moule (30).

9. Entretoise selon l'une des revendications 1 à 8, **caractérisée par** un bord non-arrondi (40) entre un deuxième flanc (39) et la face d'appui (31) de la partie de moule (30).

10. Entretoise selon l'une des revendications 1 à 9, **caractérisée en ce que** le premier flanc (37) et/ou le deuxième flanc (39) de la partie de moule (30) comprend une portion concave dans une vue en coupe transversale.

11. Entretoise selon l'une des revendications 1 à 10, **caractérisée en ce qu'**une couche de la matière fibreuse (41), appliquée sur la face d'appui (31) de la partie de moule (30), est guidée jusqu'à chevaucher une couche de la matière fibreuse (41) appliquée sur le deuxième flanc (39) de la partie de moule (30).

12. Entretoise selon l'une des revendications 1 à 11, **caractérisée en ce que**, lorsque l'on regarde dans la direction longitudinale de l'entretoise, le noyau d'entretoise (27) présente une variation brusque de largeur et **en ce que** la rainure (32) de la partie de moule (30) ne présente pas de variation brusque de diamètre.

13. Entretoise selon l'une des revendications 1 à 12, **caractérisée en ce que** le noyau d'entretoise (27) est disposé entre une première partie de moule (30) et une deuxième partie de moule (30).

14. Pale de rotor destinée à une éolienne, ladite pale de rotor comprenant une partie de coque côté dépression (21) et une partie de coque côté pression (22), les parties de coque (21, 22) étant reliées entre elles au niveau d'un bord avant (23) et d'un bord arrière (24) de la pale de rotor et renfermant entre elles une cavité, et une entretoise selon l'une des revendications 1 à 13, une première face d'appui de l'entretoise étant reliée à la partie de coque côté dépression (21) et une deuxième face d'appui de l'entretoise étant reliée à la partie de coque côté pression (22).

15. Procédé de fabrication d'une entretoise selon l'une des revendications 1 à 13, procédé dans lequel au moins une couche (41) d'une matière fibreuse est insérée dans un moule, dans lequel une première partie de moule (30) et une deuxième partie de moule (30) sont placées sur les couches (41) de la matière fibreuse de telle sorte que les faces frontales (32) des parties de moule (30) soient dirigées l'une vers l'autre et que les faces d'appui (31) des parties de moule (30) soient opposées l'une à l'autre et dans lequel un noyau d'entretoise (27) est inséré dans le moule de telle sorte que le noyau d'entretoise (27) soit disposé entre les faces frontales (32) des parties de moule (30).
